# EUROPÄISCHE PATENTSCHRIFT

(11) **EP 1 343 839 B1**
(45) Veröffentlichungstag und Bekanntmachung des Hinweises auf die Patenterteilung: **19.03.2008**
(21) Anmeldenummer: 01985852.1
(22) Anmeldetag: 07.12.2001
(51) Int. Cl.: C08K 5/33, C09J 109/00, B60R 13/00

(54) **KAUTSCHUK-ZUSAMMENSETZUNGEN MIT PLASTISOLARTIGEM FLIESSVERHALTEN**
RUBBER COMPOSITION COMPRISING PLASTISOL FORMED FLOW PROPERTIES
COMPOSITIONS CAOUTCHOUC PRESENTANT UN COMPORTEMENT D'ECOULEMENT DE TYPE PLASTISOL

(30) Priorität: 16.12.2000 DE 10062860
(43) Veröffentlichungstag der Anmeldung: 17.09.2003
(73) Patentinhaber: Henkel KGaA, 40589 Düsseldorf (DE)
(72) Erfinder: SAUER, Ralf, 68789 St. Leon-Rot (DE); ZAHN, Thomas, 69123 Heidelberg (DE); BORN, Peter, 69207 Sandhausen (DE); BUTT, Angelika, 64347 Griesheim (DE)
(74) Vertreter: Scheffler, Ingolf
(86) Internationale Anmeldenummer: PCT/EP2001/014384
(87) Internationale Veröffentlichungsnummer: WO 2002/048255

(56) Entgegenhaltungen:
- EP-A- 0 356 715
- US-A- 2 524 977
- US-A- 3 629 173
- US-A- 6 004 425
- DATABASE WPI Section Ch, Week 198251 Derwent Publications Ltd., London, GB; Class A18, AN 1982-10600J XP002197276 & JP 57 185367 A (KURARAY CO LTD), 15. November 1982 (1982-11-15)

## Beschreibung

Die Erfindung betrifft einkomponentige hitzehärtbare Zusammensetzungen auf der Basis von flüssigen Kautschuken, die ein plastisolartiges Fließverhalten haben, deren Verwendung im Automobilrohbau sowie ein Verfahren zur Versiegelung, Verklebung oder Unterfütterung von Bauteilen im Fahrzeugrohbau.

Die Verklebung bzw. das Abdichten von Blechteilen im Fahrzeugbau, insbesondere bei Karosserien von Automobilen, wird häufig an Rohblechteilen vorgenommen. Die Aushärtung der hierbei eingesetzten Kleb-/Dichtstoffe erfolgt später in den Lacktrockenöfen. Vorher durchlaufen die verklebten bzw. abgedichteten Teile Reinigungs-, Phosphatier- und Tauchgrundierungsstufen. Durch die in diesen Stufen verwendeten Behandlungsmittel können die Kleb- bzw. Dichtmittel aus den Klebefugen gespült werden. Um diesen Anforderungen gerecht zu werden, sind verschiedene Vorgehensweisen bekannt geworden, z.B. eine thermisch/induktive Vorhärtung von niedrigviskosen, pastösen Kleb-/Dichtstoffen, die Verwendung von Klebstoffen in Form von Lösungsmittelhaltigen - Zusammensetzungen oder Hotmelts, als zweikomponentige Produkte oder auch als Formteile, die in der Regel manuell appliziert werden und zum Zeitpunkt der Applikation eine Eigenklebrigkeit besitzen. Diese Formteile können dabei in Band- oder Rundschnurform oder als Stanzteile oder als Profile beliebigen Querschnitts vorliegen.

Niedrigviskose, pastöse Kleb- / Dichtstoffe lassen sich besonders einfach durch Spritz- bzw. Sprühapplikationen oder Punktapplikationen oder auch Extrusionen einsetzen, daher finden derartige Produkte insbesondere auf der Basis von Plastisolen auch im Rohbau sehr häufig Einsatz.

Unter Plastisolen werden allgemein Dispersionen von organischen Kunststoffen in Weichmachern verstanden, welche beim Erwärmen auf höhere Temperatur gelieren und beim Abkühlen aushärten. Die in der Praxis heute noch gebräuchlichen Plastisole enthalten ganz überwiegend feinpulvriges Polyvinylchlorid (PVC), welches in einem flüssigen Weichmacher dispergiert ist und eine Paste bildet. Derartige Polyvinylchloridplastisole finden für die verschiedensten Zwecke Anwendung. Sie werden u.a. als Dichtungsmassen, z.B. für Nahtabdichtungen bei Metallbehältern oder als Bördelnahtkleber in der Metallindustrie, als Korrosionsschutzüberzüge für Metalle (beispielsweise als Unterbodenschutz für Kraftfahrzeuge), zum Imprägnieren und Beschichten von Substraten aus textilen Materialien (z.B. als Teppichrückseitenbeschichtung), als Kabelisolierungen usw. eingesetzt). Es sind auch Plastisole auf der Basis von feinpulvrigen Methacrylatcopolymeren (PMMA) oder Styrolcopolymeren bekannt geworden. Derartige Plastisole, insbesondere auf Basis von PVC oder PMMA werden auch im Rohbau im Automobilbau in umfangreichem Masse eingesetzt. Zur Unterfütterung von versteifenden Strukturen wie Motorhauben, Kofferraumdeckeln, Türen, Dachkonstruktionen sowie zur Bördelnahtverklebung und zur Versiegelung von Nähten aus anderweitigen Fügungsverfahren. Vorteilhaft bei der Verwendung von Plastisolen für diese Anwendungszwecke sind deren günstiges Fließverhalten, insbesondere bei Raumtemperatur. Um die Wäscherbeständigkeit in den diversen Reinigungs-, Phosphatier und Tauchgrundierungsstufen bei der Fertigung der Automobilkarossen zu gewährleisten, werden diese Plastisol - Zusammensetzungen häufig in einem Vorgelierungsprozess soweit angeliert, daß ihre Viskosität hoch genug ist, um diese Wäscherbeständigkeit und eine Anfangsfestigkeit der Bauteile zu gewährleisten.

Neben den vorgenannten Vorteilen haben die Plastisol - Zusammensetzungen eine Reihe von gravierenden Nachteilen, so zeigt ihre Alterungsbeständigkeit große Schwächen, so daß sich durch Korrosion und, damit verbunden, Haftungsverluste Qualitätseinbußen ergeben. Insbesondere hat sich gezeigt, daß die im Rohbau verwendeten Plastisole zur Feuchtigkeitsaufnahme neigen können. Bei Bauteilen, die lediglich vorgeliert wurden und dann entweder längere Zeit zwischengelagert werden müssen oder an entfernte Produktionsstandorte transportiert werden müssen ist letzteres besonders gravierend. Weiterhin zeigen sie gewisse Schwächen in der Alterungsbeständigkeit nach VDA - Wechseltest und Salzsprühtest gemäß DIN 50021. Auch die Lagerstabilität derartiger Plastisol-Zusammensetzungen ist verbesserungsbedürftig, da sie gelegentlich zum Separieren der dispersen und der flüssigen Phase neigen. Fernerhin tendieren sie zum "Stocken" d.h. bei längerer Lagerung wird, vermutlich durch Agglomerationsprozesse, das Material so hochviskos, daß es vor der Applikation zunächst einer hohen Scherung unterworfen werden muß, um es wieder in den niederviskosen, spritzbaren Zustand zu überführen. Außerdem sind die Plastisol - Zusammensetzungen bezüglich ihrer maximalen Lagertemperatur sehr empfindlich, sie müssen auf jeden Fall unterhalb von 40 °C gelagert werden, weil sonst bereits eine teilweise Angelierung des Plastisols erfolgt. Darüber hinaus haben auch ausgehärtete Plastisole thermoplastischen Charakter d.h. ihre Festigkeit bei höheren Temperaturen ist stark eingeschränkt, so daß sie für strukturelle Verklebungen nicht einsetzbar sind.

Als alternative Klebstoffe oder Dichtungs- und Versiegelungsmassen wurden daher in jüngerer Zeit verstärkt Zusammensetzungen auf der Basis von vulkanisierbaren Kautschukmischungen vorgeschlagen. Die EP-B-97394 beschreibt eine Klebstoffmischung auf der Basis eines flüssigen Polybutadienkautschukes, pulverförmigem Schwefel, organischen Beschleunigern und gegebenenfalls festem Kautschuk. B.D. Ludbrook, Int. J. Adhesion and Adhesives Vol. 4, No.4, S. 148-150, gibt an, daß derartige, auf flüssigen Polybutadienen basierende Klebstoffe, durch entsprechende Auswahl der Menge an Schwefel und Beschleunigern Festigkeitswerte erreichen können, die denen von flexibilisierten Epoxyklebstoffen gleichwertig sind. Während diese Formulierungen gute Härtungseigenschaften und gute Alterungsbeständigkeit haben und auch auf normalem geölten Stahlblech einigermaßen brauchbare Haftung zeigen, ist ihre Einsetzbarkeit für die diversen verzinkten Stahlbleche unbefriedigend, außerdem ist die Bruchdehnung dieser hochfesten Kautschukklebstoffe sehr gering. Sie sind nicht spritzbar und müssen bei höherer Temperatur extrudiert werden.

Zur Verbesserung der Haftung schlägt die DE-C-3834818 vor, für den flüssigen Kautschuk OH-terminierte Polybutadiene einzusetzen. Gemäß EP-B-441244 können als funktionelles Kautschukpolymer neben hydroxyfunktionellen Homo- oder Copolymeren auch solche mit Thiol-, Amino-, Amido-, Carboxyl-, Epoxy-, Isocyanat-, Anhydrid- oder Acetoxy-Gruppen eingesetzt werden, wobei jedoch die ausgehärtete Klebstoffmischung eine Bruchdehnung aufweist, die 15 % nicht übersteigt.

Gemäß EP-B-309903 bzw. DE-C-4027064 können den Klebstoffmischungen auf Basis von flüssigen Kautschuken polyfunktionelle Epoxyverbindungen zugesetzt werden, um die Haftung zu verbessern bzw. die Zugscherfestigkeit zu verbessern. Abgesehen davon, daß es aus arbeitshygienischen Gründen unerwünscht ist, Klebstoffzusammensetzungen einzusetzen, die niedermolekulare Epoxidharze enthalten, sind die in den beiden letztgenannten Schriften beschriebenen Klebstoffzusammensetzungen nicht als Strukturklebstoffe geeignet, da sie nur ein sehr niedriges Festigkeitsniveau von maximal 3 MPa erreichen.

Die WO 96/23040 beschreibt einkomponentige, hitzehärtende Strukturklebstoffe auf der Basis von Flüssigkautschuken, die gegebenenfalls anteilig funktionelle Gruppen enthalten können, Festkautschuken, thermoplastischen Polymerpulvern und Schwefel sowie Vulkanisationsbeschleunigern, diese eignen sich zum Verkleben von Metallteilen. Es können Zugscherfestigkeiten von über 15 MPa bei gleichzeitiger hoher Bruchdehnung von über 15 % erhalten werden. Diese Klebstoffe sind im wesentlichen frei von niedermolekularen Epoxidharzen und eignen sich insbesondere für den Einsatz im Rohbau in der Automobilindustrie.

Aus der WO99/03946 sind warm pumpbare, heißhärtende Massen auf Basis von Ethylen-Vinylacetat-Copolymeren (EVA) enthaltend mindestens ein festes EVA-Copolymer mit einem Erweichungspunkt über 50 °C, gemessen nach der Ring & Ball-Methode nach ASTM D 28, mindestens einen flüssigen reaktiven Weichmacher mit olefinisch ungesättigten Doppelbindungen und mindestens ein peroxidisches Vernetzungsmittel bekannt. Nach den Angaben dieser Schrift eigenen sich diese Zusammensetzungen als Versiegelungsmittel von Fein- und Grobnähten im Fahrzeugbau. Bei Zusatz von Treibmitteln lassen sich diese auch als Unterfütterungsklebstoffe einsetzen. Die bevorzugten Einsatzgebiete sind im Rohbau bei der Fertigung von Automobilen.

Die Kautschuk-Zusammensetzungen des vorgenannten Standes der Technik eigenen sich zwar generell sehr gut für ihren Einsatz im Rohbau bei der Automobilfertigung, sie weisen auch hervorragende Eigenschaft bezüglich der Wäscherbeständigkeit, ihrer Alterungsbeständigkeit und der geforderten technischen Eigenschaften auf. Ein wesentlicher Nachteil dieser Kautschukmassen ist jedoch ihre sehr hohe Viskosität, so daß diese in aller Regel nur warm verpumpbar appliziert werden können. Sie können nicht mit herkömmlichen Spritzverfahren, wie z.B. den Airless-Verfahren aufgetragen werden. Angesichts dieses Standes der Technik haben sich die Erfinder die Aufgabe gestellt, heißhärtbare Kautschuk-Zusammensetzungen bereit zu stellen, die die günstigen Verarbeitungs- und Fließeigenschaften von klassischen Plastisolen aufweisen, ohne deren vorgenannte Nachteile zu haben.

Die JP-A-57 185 367 in Form des Abstracts der Derwent Publications Ltd., XP-002197276, AN-1982/10600J, beschreibt eine Klebstoffzusammensetzung, enthaltend a) einen flüssigen Dien-Kautschuk mit einem Molgewicht von 6000 bis 100 000, b) einen kristallinen Dien-Kautschuk mit einem Molgewicht von 60 000 bis 400 000 und c) ein Vulkanisiermittel, bestehend aus Schwefel, Peroxiden oder Chinondioxim.

Die US-A-3 629 173 offenbart einen flüssigen, depolymerisierten Polyisoprenkautschuk, der als Dichtstoff Verwendung finden kann. Als Vulkanisiermittel dient eine Kombination aus p-Chinondioxim, Bleidioxid und einer gesättigten, einwertigen, aliphatischen Säure mit 4 bis 12 C-Atomen, ggf. mit einem Zusatz von Schwefel.

Demgegenüber betrifft die vorliegende Erfindung eine heißhärtende reaktive Zusammensetzung auf der Basis von natürlichen und/oder synthetischen olefinische Doppelbindungen enthaltenden Elastomeren und Vulkanisationsmitteln, dadurch gekennzeichnet, daß sie
a) mindestens ein flüssiges cis-1,4-Polyisopren mit einem Molekulargewicht zwischen 20000 und 70000, vorzugsweise zwischen 20000 und 50000,
b) ein Vulkanisationssystem aus Schwefel, Beschleunigern und Chinonoximen
enthalten,
und dass sie frei ist von Festkautschuken.

Ein weiterer Gegenstand der vorliegenden Erfindung ist die Verwendung dieser heißhärtenden, reaktiven Zusammensetzungen als ein- oder zweikomponentiger Klebstoff, Dichtstoff, Versiegelungsmasse oder Beschichtungsmasse im Automobilbau.

Ein weiterer Gegenstand der vorliegenden Erfindung betrifft ein Verfahren zur Versiegelung von Grob- und/oder Feinnähten im Fahrzeugrohbau oder ein Verfahren zur Unterfütterung oder Verklebung von Bauteilen im Fahrzeugrohbau, daß die folgenden wesentlichen Verfahrensschritte beinhaltet:
a) Applizieren der vorgenannten Zusammensetzung auf mindestens ein Rohbauteil durch Sprühen oder Extrudieren,
b) Fügen der Rohbauteile, gegebenenfalls gefolgt vom (Punkt-)schweißen, Bördeln, Schrauben und/oder Nieten,
c) ggf. partielles Aushärten der Zusammensetzung durch kurzzeitiges Erwärmen der Teile auf Temperaturen bis zu 190°C,
d) ggf. Reinigen/Waschen der gefügten Rohbauteile ggf. gefolgt von üblichen Oberflächenvorbehandlungen,
e) Elektrotauchlackierung, Härten und/oder Vernetzen der Versiegelungsmasse während des Einbrennens der Elektrotauchlackierung bei Temperaturen zwischen 160 °C und 240 °C.

Wesentliche Merkmale der erfindungsgemäßen Zusammensetzungen sind die Abwesenheit von Festkautschuken d.h. von Kautschuken mit einem Molekulargewicht von 100 000 oder höher. Ein weiteres wesentliches Kennzeichen der erfindungsgemäßen Zusammensetzungen ist die Verwendung von flüssigen cis-1,4-Polyisoprenen mit einem Molekulargewicht zwischen 20 000 und 70 000. Diese flüssige Polyisoprene bringen die notwendige Elastizität und hohe Festigkeit der ausgehärteten Kautschuk-Zusammensetzungen.

Die erfindungsgemäßen reaktiven Zusammensetzungen enthalten mindestens einen der folgenden Stoffe:
- ein oder mehrere flüssige cis-1,4-Polyisopren(e) mit einem Molekulargewicht zwischen 20000 und 70000, vorzugsweise zwischen 20000 und 50000,
- einen oder mehrere weitere Flüssigkautschuke oder Elastomere,
- Vulkanisationsmittel, Vulkanisationsbeschleuniger, Katalysatoren,
- Füllstoffe, Pigmente,
- Klebrigmacher und/oder Haftvermittler,
- Treibmittel,
- Extenderöle,
- Alterungsschutzmittel,
- Rheologiehilfsmittel.

Die Flüssigkautschuke oder Elastomere enthalten dabei pro Molekül mindestens eine olefinisch ungesättigte Doppelbindung. Sie können dabei aus der folgenden Gruppe der Homo- und/oder Copolymeren ausgewählt werden:

Polybutadiene, insbesondere die 1,4- und 1,2-Poly-butadiene, Polybutene, Polyisobutylene, 1,4- und 3,4-Polyisoprene, Styrol-Butadien-Copolymere, Butadien-Acrylnitril-Copolymere, wobei eines oder mehrere dieser Polymeren endständige und/oder (statistisch verteilte) seitenständige funktionelle Gruppen haben können. Beispiele für derartige funktionelle Gruppen sind Hydroxy-, Amino-, Carboxyl-, Carbonsäureanhydrid- oder Epoxygruppen. Das Molekulargewicht dieser Flüssigkautschuke ist typischerweise unterhalb von 20000, vorzugsweise zwischen 900 und 10000. Der Anteil an Flüssigkautschuk an der Gesamtzusammensetzung hängt dabei von der gewünschten Rheologie der ungehärteten Zusammensetzung und der erwünschten mechanischen Steifigkeit oder Festigkeit des Verbundes und den akustischen Dämpfungseigenschaften der ausgehärteten Zusammensetzung ab. Der Anteil an flüssigem Kautschuk bzw. Elastomer variiert normalerweise zwischen 5 und 50 Gew.% der Gesamtformulierung. Dabei hat es sich als zweckmäßig erwiesen, vorzugsweise Mischungen von Flüssigkautschuken unterschiedlicher Molekulargewichte und unterschiedlicher Konfiguration in bezug auf die restlichen Doppelbindungen einzusetzen. Zur Erzielung optimaler Haftung auf den diversen Substraten wird in den besonders bevorzugten Formulierungen anteilig eine Flüssigkautschukkomponente mit Hydroxylgruppen bzw. Säureanhydridgruppen eingesetzt. Mindestens einer der Flüssigkautschuke sollte einen hohen Anteil an cis-1,4-Doppelbindungen, ein weiterer einen hohen Anteil an Vinyldoppelbindungen enthalten.

Gegenüber den bisher bekannten Kleb- und Dichtstoffen und Versiegelungsmitteln auf Kautschukbasis zeichnen sich die erfindungsgemäßen Zusammensetzungen durch die Abwesenheit von Festkautschuk aus. Festkautschuke haben bekanntlich Molekulargewichte oberhalb 100 000. Ein weiterer wesentlicher Unterschied der erfindungsgemäßen Zusammensetzungen besteht darin, daß sie ein oder mehrere flüssige cis-1,4-Polyisoprene mit einem Molekulargewicht zwischen 20 000 und 70 000, vorzugsweise zwischen 20 000 und 50 000 enthalten.

Gegebenenfalls können die erfindungsgemäßen Zusammensetzungen noch fein verteilte thermoplastische Polymerpulver enthalten. Beispiele für geeignete thermoplastische Polymere sind Polypropylen, Polyethylen, thermoplastische Polyurethane, Methacrylatcopolymere, Styrolcopolymere, Polyvinylchlorid, Polyvinylacetal sowie insbesondere Polyvinylacetat und dessen Copolymere wie beispielsweise Ethylenvinylacetatcopolymere. Obwohl die Teilchengröße bzw. Teilchengrößenverteilung der Polymerpulver nicht besonders kritisch zu sein scheint, sollte die mittlere Teilchengröße unter 1 mm, vorzugsweise unter 350 µm liegen. Die Menge des ggf. zugesetzten thermoplastischen Polymerpulvers liegt zwischen 0 und 20 Gew.%, bevorzugt zwischen 2 und 10 Gew.%.

Die Vernetzungs- bzw. Härtungsreaktion der Kautschukzusammensetzung und das Aufschäumen haben einen entscheidenden Einfluß auf die Abdichtfunktion, auf die akustische Dämpfung sowie auf die versteifende Wirkung oder Festigkeit des Bauteils, daher muß das Vulkanisationssystem und ggf. die Treibmittelzusammensetzung besonders sorgfältig ausgewählt und abgestimmt werden. Für das Vulkanisationssystem eignen sich eine Vielzahl von Vulkanisationsmitteln in Kombination mit elementarem Schwefel, aber auch Vulkanisationssysteme ohne freien Schwefel. Zu letzteren zählen die Vulkanisationssysteme auf der Basis von Thiuramdisulfiden, organischen Peroxiden, polyfunktionellen Aminen, Chinonen, p-Benzochinondioxim, p-Nitrosobenzol und Dinitrosobenzol oder auch die Vernetzung mit (blockierten) Diisocyanaten. Ganz besonders bevorzugt sind jedoch Vulkanisationssysteme auf der Basis von elementarem Schwefel und organischen Vulkanisationsbeschleunigern sowie Zinkverbindungen. Der pulverförmige Schwefel wird dabei in Mengen von 4 bis 15 Gew.%, bezogen auf die Gesamtzusammensetzung eingesetzt, besonders bevorzugt werden Mengen zwischen 6 und 8% eingesetzt. Als organische Beschleuniger eignen sich Dithiocarbamate (in Form ihrer Ammonium- bzw. Metallsalze), Xanthogenate, Thiuram-Verbindungen (Monosulfide und Disulfide), Thiazolverbindungen, Aldehyd/Aminbeschleuniger (z.B. Hexamethylentetramin) sowie Guanidinbeschleuniger, ganz besonders bevorzugt wird Dibenzothiazyldisulfid (MBTS)), 2-Mercaptobenzthiazol (MBT), dessen Zinksalz (ZMBT) oder Diphenylguanidin. Erfindungsgemäß werden besonders vorteilhafte Vulkanisationseigenschaften sowie Endeigenschaften der ausgehärteten Kautschuk-Zusammensetzungen erzielt, wenn ein kombiniertes Vulkanisationssystem aus elementarem Schwefel, oben genannten organischen Beschleunigern und Chinondioximen eingesetzt werden. Beispielhaft erwähnt sei p-Benzochinondioxim es können jedoch auch andere Chinondioxime in Kombination mit den vorgenannten Schwefelsystemen eingesetzt werden. Diese organischen Beschleuniger werden in Mengen zwischen 2 und 10 Gew.% bezogen auf die Gesamtformulierung, bevorzugt zwischen 3 und 8 Gew.%, eingesetzt. Bei den als Beschleuniger wirkenden Zinkverbindungen kann zwischen den Zinksalzen von Fettsäuren, Zinkdithiocarbamaten, basischen Zinkcarbonaten sowie insbesondere feinteiligem Zinkoxid gewählt werden. Der Gehalt an Zinkverbindungen liegt im Bereich zwischen 1 und 10 Gew.%, vorzugsweise zwischen 3 und 7 Gew.%. Zusätzlich können weitere typische Kautschuk-Vulkanisationshilfsmittel wie Fettsäuren (z.B. Stearinsäure) in der Formulierung vorhanden sein.

Zum Erzielen der Aufschäumung während des Härtungsvorganges können prinzipiell alle gängigen Treibmittel verwendet werden, vorzugsweise werden jedoch organische Treibmittel aus der Klasse der Azoverbindungen, N-Nitrosoverbindungen, Sulfonylhydrazide oder Sulfonylsemicarbazide. Für die erfindungsgemäß zu verwendenden Azoverbindungen seien beispielhaft das Azobisisobutyronitril und insbesondere das Azodicarbonamid genannt, aus der Klasse der Nitrosoverbindungen sei beispielhaft das Di-Nitrosopentamethylentetramin gebannt, aus der Klasse der Sulfohydrazide das 4,4'-Oxybis(benzolsulfonsäurehydrazid), das Diphenylsulfon-3,3'-disulfohydrazid oder das Benzol-1,3-disulfohydrazid und aus der Klasse der Semicarbazide das p-Toluolsulfonylsemicarbazid genannt.

An die Stelle der vorgenannten Treibmittel können auch die sogenannten expandierbaren Mikrohohlkugeln ("expandable microspheres"), d.h. nicht expandiert thermoplastische Polymerpulver treten, die mit niedrigsiedenden organischen Flüssigkeiten getränkt bzw. gefüllt sind. Derartige "Microspheres" sind beispielsweise in der EP-A-559254, der EP-A-586541 oder der EP-A-594598 beschrieben. Obwohl nicht bevorzugt, können auch bereits expandierte Mikrohohlkugeln verwendet bzw. mit verwendet werden. Gegebenenfalls können diese expandierbaren / expandierten Mikrohohlkugeln in beliebigem Mengenverhältnis mit den oben genannten "chemischen" Treibmitteln kombiniert werden. Die chemischen Treibmittel werden in schäumbaren Zusammensetzungen in Mengen zwischen 0,1 und 3 Gew.%, vorzugsweise zwischen 0,2 und 2 Gew. %, die Mikrohohlkugeln zwischen 0,1 und 4 Gew. %, vorzugsweise zwischen 0,2 und 2 Gew. % verwendet.

Obwohl die erfindungsgemäßen Zusammensetzungen aufgrund des bevorzugten Gehaltes an Flüssigkautschuk mit funktionellen Gruppen in der Regel bereits eine sehr gute Haftung auf den Substraten haben, können, falls erforderlich, Klebrigmacher und/oder Haftvermittler zugesetzt werden. Hierzu eignen sich beispielsweise Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxyharzen in geringen Mengen kann bei manchen Substraten die Haftung verbessern. Hierfür werden dann jedoch vorzugsweise die festen Epoxidharze mit einem Molekulargewicht von über 700 in fein gemahlener Form eingesetzt. Falls Klebrigmacher bzw. Haftvermittler eingesetzt werden, hängt deren Art und Menge von der Polymerzusammensetzung sowie dem Substrat, auf welches die Zusammensetzung appliziert wird, ab. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.% verwendet.

Vorzugsweise sind die erfindungsgemäßen Zusammensetzungen frei von Weichmachern und Extenderölen. Es kann jedoch notwendig sein, die Rheologie der ungehärteten Zusammensetzung und/oder die mechanischen Eigenschaften der gehärteten Zusammensetzung durch Zugabe von sog. Extenderölen, d.h. aliphatischen, aromatischen oder naphtenischen Ölen zu beeinflussen. Vorzugsweise geschieht diese Beeinflussung zwar durch zweckmäßige Auswahl der niedrigmolekularen Flüssigkautschuke oder durch die Mitverwendung von niedermolekularen Polybutenen oder Polyisobutylenen. Falls Extenderöle eingesetzt werden, werden Mengen im Bereich zwischen 2 und 15 Gew.% verwendet.

Die Füllstoffe können aus einer Vielzahl von Materialien ausgewählt werden, insbesondere sind hier zu nennen Kreiden, natürliche oder gemahlene Calciumcarbonate, Calcium-Magnesiumcarbonate, Silikate, Talkum, Schwerspat sowie Ruß. Es kann ggf. zweckmäßig sein, daß zumindest ein Teil der Füllstoffe oberflächenvorbehandelt ist, insbesondere hat sich bei den verschiedenen Calciumcarbonaten bzw. Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Ggf. können die erfindungsgemäßen Zusammensetzungen noch zwischen 1 und 20 Gew.%, vorzugsweise zwischen 2 und 15 Gew.% an Calciumoxid enthalten. Der Gesamtanteil an Füllstoffen in der Formulierung kann zwischen 10 und 70 Gew.% variieren, der Vorzugsbereich liegt zwischen 25 und 60 Gew.%.

Gegen den thermischen, thermooxidativen oder Ozon - Abbau der erfindungsgemäßen Zusammensetzungen können konventionelle Stabilisatoren oder Alterungsschutzmittel, wie z.B. sterisch gehinderte Phenole oder Aminderivate eingesetzt werden, typische Mengenbereiche für diese Stabilisatoren sind 0,1 bis 5 Gew.%.

Obwohl die Rheologie der erfindungsgemäßen Zusammensetzungen auch durch die Auswahl der Füllstoffe und das Mengenverhältnis der niedermolekularen Flüssigkautschuke in den gewünschten Bereich gebracht werden kann, können konventionelle Rheologiehilfsmittel wie z.B. pyrogene Kieselsäuren, Bentone oder fibrillierte oder Pulp-Kurzfasern im Bereich zwischen 0,1 und 7% oder auch hydrierte Ricinusöl-Derivate - bekannt z.B. unter dem Handelsnamen Rilanit (Fa. Cognis) - zugesetzt werden. Außerdem können weitere konventionelle Hilfs- und Zusatzmittel in den efindungsgemäßen Zusammensetzungen Verwendung finden.

Die erfindungsgemäßen Zusammensetzungen weisen gegenüber dem Stand der Technik Fließeigenschaften auf, die sehr ähnlich denen von Plastisolen sind, ohne daß sie deren vorgenannte unvorteilhaften Eigenschaften haben, d.h. ihre Alterungsbeständigkeit ist gegenüber konventionellen Plastisolen verbessert, die Wasseraufnahme bei applizierten und unausgehärteten Materialien ist deutlich verringert. Dies bedeutet, daß sie die guten Verarbeitungseigenschaften in Bezug auf Rheologie der konventionellen Plastisole aufweisen, gleichzeitig aber die sehr guten Alterungsbeständigkeiten und Festigkeitswerte der konventionellen vulkanisierbaren (härtbaren) Kautschuk-Zusammensetzungen besitzen. Aus diesem Grund könnte man auch von "Kautschuk-Plastisolen" sprechen, obwohl ihre Zusammensetzungen nicht denen typischer Plastisole entsprechen. Neben der bevorzugten Ausführungsform als einkomponentige hitzehärtbare Kleb- / Dichtstoff bzw. Versiegelungszusammensetzung können die erfindungsgemäßen Zusammensetzungen auch als zweikomponentige Systeme aufgebaut sein, in Analogie zu den in der EP 356715 beschriebenen zweikomponentigen Klebstoffen. Auch diese Ausführungsform ist ausdrücklich Gegenstand der vorliegenden Erfindung.

Das Hauptanwendungsfeld für die erfindungsgemäßen heißhärtenden reaktiven Zusammensetzungen ist der sogenannte Rohbau in der Automobilindustrie, hier sind die Teile, die später die Hohlräume der Karosserie bilden oder die späteren Fügenähte, gut zugänglich, so daß die Applikation mit herkömmlichen Pump-, Dosier-, Spritz-, oder Extrusions-Einrichtungen für niederviskose, pastöse Materialien vorgenommen werden kann. Die bevorzugten Anwendungsfelder für die erfindungsgemäßen Zusammensetzungen sind Unterfütterungsklebstoffe für Motorraumdeckel und Kofferraumhauben oder auch Türkonstruktionen oder Dachaufbauten und Seitenteilkonstruktionen sowie Bördelnahtklebstoffe oder Bördetnahtversiegelungsmaterialien.

Für die Härtungs- und ggf. Aufschäumreaktion der Zusammensetzungen stehen dann die Prozeßtemperaturen der verschiedenen Lacköfen zur Verfügung, d.h. ein Temperaturbereich zwischen 80°C und 240°C für etwa 10 bis 35 Minuten, vorzugsweise dient der Durchlauf der Karosserie bzw. der Teile durch den sogenannte "EC-Ofen" zum Aushärten und ggf. Aufschäumen der erfindungsgemäßen Zusammensetzungen, d.h. Temperaturen zwischen 160 °C und 200°C.

Im Fertigungsablauf kann es sinnvoll sein, daß nach der Applikation der erfindungsgemäßen Zusammensetzung und dem Fügen der Bauteile eine Vorgelierung bzw. teilweise Aushärtung erfolgt. Hierzu können alle an sich bekannten Vorgeliereinrichtungen wie z.B. Vorgelier-Öfen oder auch Induktionsheizanlagen verwendet werden. Ein typischer Temperaturbereich für die Vorgelierung liegt zwischen 100 °C und 160 °C. Insbesondere bei der Induktionserwärmung ist nur ein sehr kurzzeitiges Erwärmen in Bereich weniger Sekunden notwendig, wobei die Substrattemperatur bis zu 190°C betragen kann und kurzzeitig deutlich darüber liegen kann.

Die erfindungsgemäßen Zusammensetzungen können in an sich bekannter Weise in Mischagregaten mit hoher Scherwirkung hergestellt werden, hierzu gehören z.B. Kneter, Planetenmischer, Innenmischer, sogenannte "Banbury-Mischer" und ähnliche dem Fachmann bekannte, Mischagregate.

In den nachfolgenden Ausführungsbeispielen soll die Erfindung näher erläutert werden, wobei die Auswahl der Beispiele keine Beschränkung des Umfanges des Erfindungsgegenstandes darstellen soll.

### Beispiele

Nachfolgend werden die erfindungsgemäßen "Kautschuk-Plastisole" mit herkömmlichen Zusammensetzungen auf der Basis heißapplizierbarer Kautschukmaterialien mit Festkautschukanteil sowie mit Plastisolen des Standes der Technik verglichen.

### Beispiel 1 (Vergleich)

Standardrezeptur, reaktiver Unterfütterungsklebstoff auf Kautschukbasis mit Festkautschukanteil

| | |
|---|---|
| 4,70 | cis-1,4-Polybutadien, fest |
| 4,00 | Zinkoxid |
| 2,50 | Calciumoxid |
| 0,50 | 2,2 Methylen - bis -(4 Methyl-6-tert. - Butylphenol) |
| 0,50 | Russ |
| 0,10 | Mikrohohlkugeln |
| 21,45 | Calciumcarbonat |
| 19,60 | Calciumcarbonat, gecoatet mit Stearat |
| 25,245 | Polybutadien flüssig, MG ca.1800, cis -1,4 ca. 72% |
| 6,85 | Polybutadien mit aktiven Carboxylgruppen, MG 1700 |
| 4,00 | technisches Weißöl |
| 6,00 | Schwefel |
| 4,00 | MBTS |
| 0,05 | Azodicarbonsäurediamid |
| 0,005 | Benzosulfonsäure-Zinksalz |
| 0,50 | Siliciumdioxid |

### Beispiel 2 (Vergleich)

Unterfütterungsklebstoff auf Basis PMMA-Plastisol

| | |
|---|---|
| 18,00 | Polymethylmethacrylat |
| 30,30 | Alkylsulfonsäureester des Phenols |
| 3,50 | 2-Ethyl-hexyl-benzyl-phthalat/ Benzyoctylphtalat |
| 0,30 | Imidazol |
| 3,00 | Araliphatisches Polyetheramin |
| 2,00 | Kieselkreide (natürliches Agglomerat, aus Quarz und lamellarem Kaolinit) |
| 27,00 | Bariumsulfat |
| 4,90 | CaO |
| 9,00 | Graphit |
| 1,20 | Leitfähigkeitsruss |
| 0,30 | Benzoltetracarbonsäure-1.2.4.5.-Dianhydrid |
| 0,30 | Methyl-Hexahydrophtalsäureanydrid |
| 0,20 | Fettalkoholester |

### Beispiel 3 (erfindungsgemäß)

Unterfütterungsklebstoff auf Basis "Kautschukplastisol"

| | |
|---|---|
| 7,00 | cis-1,4-Polyisopren, flüssig, MG 29000 |
| 8,00 | Zinkoxid |
| 8,00 | Calciumoxid |
| 0,50 | 2,2 Methylen - bis -(4 Methyl-6-tert. - Butylphenol) |
| 3,00 | Russ |
| 0,50 | ca. 65% p-Benzochinondioxim, phlegmatisiert mit ca. 35% Mineralölraffinaten |
| 17,10 | Mg-Al-silikat |
| 9,40 | Calciumcarbonat, gecoatet mit Stearat |
| 13,00 | Polybutadien flüssig, MG ca.1800, cis -1,4 ca. 72% |
| 2,70 | Polybutadien mit aktiven Carboxylgruppen, MG ca.1700 |
| 9,50 | niedermolekulares,sterospez. Polybutadien-Öl, MG 1800, vinyl 50% |
| 5,50 | Schwefel |
| 4,50 | MBTS |
| 0,50 | MBT |
| 0,50 | ZMBT |
| 9,00 | Technisches Weißöl, Paraffinraffinat |
| 0,30 | Zinkdimethyldithiocarbamat |
| 1,00 | Siliciumdioxid (amorph) |

### Rheologische Meßdaten:

Methode: Schergeschwindigkeitsversuch nach Bingham; Prinzip Platte-Platte-Rotationsviskosimeter, Spindel MP 53, Temperatur 20°C, Spaltgröße 0,2 mm, Profil: 60 s Vorheizzeit, 120s 0-200 U/ min, 120s const. 200 U/ min, 120s 200-0 U/min.

Dann wurde der 20. Meßpunkt (a) und der 41. Meßpunkt (b) abgelesen.(spezielle BMW- Methode mit den Meßpunkten).

| | Beispiel 1 | Beispiel 2 | Beispiel 3 |
|---|---|---|---|
| Viskosität:[Pa.s]: | a:96,12, b:51,41 | a: 44,12 , b: 35,70 | a: 52,6 , b: 47,7 |
| | | | |
| ZSF (25x20x3mm) | 1,95 MPa | 2,80 MPa | 2,18 MPa |
| Temp.: 25'175°C | | | |

Aus den rheologischen Messdaten wird deutlich, daß der Unterfütterungsklebstoff gemäß Beispiel 1 bei Raumtemperatur so ungünstige Fließeigenschaften hat, daß er nicht geeignet ist, bei Raumtemperatur mit herkömmlichen Plastisol-Applikationsanlagen, wie z.B. Airless-Spritzeinrichtungen appliziert zu werden. Während der erfindungsgemäße Klebstoff des Beispiels 3 ähnliche Fließeigenschaften wie das konventionelle Plastisol des Beispiels 2 aufweist. Gleichzeitig wird deutlich, daß die Zugscherfestigkeit (ZSF) auch für das erfindungsgemäße Beispiel im Bereich der Festigkeitsanforderungen für Unterfütterungsklebstoffe liegt.

### Beispiele 4 - 5

Einflüsse cis-1,4-Polyisopren (MG 29000) gegen Polybutadien (MG 1800)

| Bsp.4 | Bp.5 | |
|---|---|---|
| 7,00 | 4,00 | cis 1,4 Polyisopren, flüssig, MG 29000 |
| 8,00 | 8,00 | Zinkoxid |
| 8,00 | 8,00 | Calciumoxid |
| 0,50 | 0,50 | 2,2 Methylen - bis -(4 Methyl-6-tert. - Butylphenol) |
| 0,50 | 0,50 | ca. 65% p-Benzochinondioxim, phlegmatisiert ca. 35% Mineralölraffinaten |
| 19,30 | 19,30 | Mg-Al-silikat |
| 9,40 | 9,40 | Calciumcarbonat, gecoatet mit Stearat |
| 12,80 | 15,80 | Polybutadien flüssig, MG ca.1800, cis -1,4 ca. 72% |
| 2,70 | 2,70 | Polybutadien mit aktiven Carboxylgruppen, MG ca.1700 |
| 10,25 | 10,25 | niedermolekulares,sterospez. Polybutadien-Öl, MG 1800, vinyl 50% |
| 1,75 | 1,75 | Schwefel |
| 4,50 | 4,50 | MBTS |
| 0,50 | 0,50 | MBT |
| 0,50 | 0,50 | ZMBT |
| 9,00 | 9,00 | Technisches Weißöl, Paraffinraffinat |
| 0,30 | 0,30 | Zinkdimethyldithiocarbamat |
| 3,00 | 3,00 | Titandioxid |
| 1,50 | 1,50 | Hydriertes Rizinusöl |

### Ergebnisse:

| | Beispiel 4: | Beispiel 5: |
|---|---|---|
| Viskosität (Pas) | a: 36,7 , b: 33,4 | a: 34,9 , b: 31,8 |
| | | |
| ZSF | | |
| Mini 15'160° C | 0,87 MPa, 100% cf | 0,61 MPa, 100% cf |
| Maxi 25'175°C | 0,60 MPa, 100% cf | 0,34 MPa, 75% cf |
| Reißdehnung % | 127,1 | 99,1 |
| 25'175°C | | |
| Reißfestigkeit MPa | 0,61 | 0,31 |
| 25'175°C | | |

Die Ergebnisse zeigen, in besonders eindrucksvoller Weise, daß die Reißfestigkeit und insbesondere auch die Reißdehnung durch den höheren Anteil an flüssigem cis-1,4-Polyisopren im Beispiel 4 positiv beeinflusst wird, ohne daß die Viskosität in Bereiche ansteigt, die eine Plastisol-artige Applikation nicht mehr zulassen würde.

### Beispiele 6 - 8:

Nachfolgend werden Anwendungsbeispiele der erfindungsgemäßen Zusammensetzungen für eine Bördelnahtversiegelung, (Bsp. 6) einen Unterfütterungsklebstoff (Bsp. 7) und einen Bördelnahtklebstoff (Bsp. 8) aufgeführt.

| Bsp.6: | Bsp. 7: | Bsp. 8: | |
|---|---|---|---|
| 7,00 | 7,00 | 10,00 | cis-1,4-Polyisopren, flüssig, MG 29000 |
| 8,00 | 8,00 | 15,00 | Zinkoxid |
| 8,00 | 8,00 | 15,00 | Calciumoxid |
| 0,50 | 0,50 | 0,50 | 2,2 Methylen-bis-(4 Methyl-6-tert.-Butylphenol)) |
| 0,50 | 0,50 | 0,40 | ca. 65% p-Benzochinondioxim, phlegmatisiert ca. 35% Mineralölraffinaten |
| 19,30 | 17,1 | - | Mg-Al-silikat |
| 9,40 | 9,40 | 12,00 | Calciumcarbonat, gecoatet mit Stearat |
| 12,80 | 13,00 | 7,00 | Polybutadien flüssig, MG ca. 1800, cis -1,4 ca. 72% |
| 2,70 | 2,70 | 2,50 | Polybutadien mit aktiven Carboxylgruppen, MG ca.1700 |
| 10,25 | 9,50 | 5,00 | niedermolekulares,sterospez. PB-Öl, MG 1800, vinyl 50% |
| 1,75 | 5,50 | 4,75 | Schwefel |
| 4,50 | 4,50 | 5,00 | MBTS |
| 0,50 | 0,50 | - | MBT |
| 0,50 | 0,50 | - | ZMBT |
| 9,00 | 9,00 | 12,00 | Technisches Weißöl, Paraffinraffinat |
| 0,30 | 0,30 | - | Zinkdimethyldithiocarbamat |
| 3,00 | - | - | Titandioxid |
| 1,50 | - | - | Hydriertes Rizinusöl |
| - | 1,00 | 0,60 | Siliciumdioxid |
| - | 3,00 | 0,50 | Ruß |
| - | - | 9,25 | Calciumcarbonat |
| - | - | 0,50 | Hexamethylenbisthiosulfat |

### Meßdaten:

| | Bsp.6: | Bsp.7: | Bsp.8: |
|---|---|---|---|
| ZSF [MPa]: | 0,60 | 2,18 | 4,75 |
| 25'175°C | | | |

Die Zugscherfestigkeiten der Beispiele 6 bis 8 zeigen, daß diese den entsprechenden Anforderungen für eine Bördelnahtversiegelung, für die eine geringe Zugscherfestigkeit (ZSF) erforderlich ist sowie einen Unterfütterungsklebstoff und einen Bördelnahtklebstoff der hohe Festigkeitsanforderungen hat, angepasst werden kann.

## Patentansprüche

1. Heißhärtende reaktive Zusammensetzung auf der Basis von natürlichen und/oder synthetischen olefinische Doppelbindungen enthaltenden Elastomeren und Vulkanisationsmitteln, **dadurch gekennzeichnet, daß** sie
a) mindestens ein flüssiges cis-1,4-Polyisopren mit einem Molekulargewicht zwischen 20000 und 70000, vorzugsweise zwischen 20000 und 50000,
b) ein Vulkanisationssystem aus Schwefel, Beschleunigern und Chinonoximen
enthalten,
und dass sie frei ist von Festkautschuken.

2. Zusammensetzung nach Anspruch 1, **dadurch gekennzeichnet, daß** sie zusätzlich mindestens ein weiteres flüssiges Polyen aus der Gruppe bestehend aus 1,2-Polybutadien, 1,4-Polybutadien, Polyisopren, Polybuten, Polyisobutylen, Copolymere des Butadiens und/oder Isoprens mit Styrol und/oder Acrylnitril, Copolymere von Acrylsäureestern mit Dienen enthält, wobei das Molekulargewicht des flüssigen Polyens im Bereich von 900 bis etwa 40000 liegt.

3. Zusammensetzung nach Anspruch 2, **dadurch gekennzeichnet, daß** das oder die flüssige(n) Polyen(e) zusätzlich terminale und/oder statistisch verteilte Carboxylgruppen, Carbonsäureanhydridgruppen, Hydroxylgruppen, Aminogruppen, Mercaptogruppen oder Epoxygruppen als funktionelle Gruppen enthält.

4. Zusammensetzung nach mindestens einem der vorhergehenden Ansprüche, **dadurch gekennzeichnet, daß** sie zusätzlich Füllstoffe, Rheologiehilfsmittel, Extenderöle, Haftvermittler und/oder Alterungsschutzmittel enthält.

5. Zusammensetzung nach mindestens einem der vorhergehenden Ansprüche, **dadurch gekennzeichnet, daß** sie plastisolartiges Fließverhalten aufweist.

6. Herstellung der heißhärtenden reaktiven Zusammensetzung nach mindestens einem der vorhergehenden Ansprüche durch Mischen der Komponenten unter hoher Scherung.

7. Verwendung der Zusammensetzung nach mindestens einem der vorhergehenden Ansprüche als ein- oder zweikomponentigen Klebstoff, Dichtstoff oder Beschichtungsmasse im Automobilrohbau.

8. Verfahren zur Versiegelung von Grob- und/oder Feinnähten im Fahrzeugrohbau **gekennzeichnet durch** die folgenden wesentlichen Verfahrensschritte
a) Applizieren der Zusammensetzung gemäß Anspruch 1 bis 5 auf mindestens ein Rohbauteil **durch** Sprühen oder Extrudieren,
b) Fügen der Rohbauteile, gegebenenfalls gefolgt vom (Punkt-)schweißen, Bördeln, Schrauben und/oder Nieten,
c) ggf. partielles Aushärten der Zusammensetzung **durch** kurzzeitiges Erwärmen der Teile auf Temperaturen bis zu 190°C,
d) ggf. Reinigen/Waschen der gefügten Rohbauteile ggf. gefolgt von üblichen Oberflächenvorbehandlungen,
e) Elektrotauchlackierung,
f) Härten und/oder Vernetzen der Versiegelungsmasse während des Einbrennens der Elektrotauchlackierung bei Temperaturen zwischen 160 °C und 240 °C.

9. Verfahren zur Unterfütterung von Bauteilen im Fahrzeugrohbau **gekennzeichnet durch** die folgenden wesentlichen Verfahrensschritte
a) Applizieren der Zusammensetzung gemäß Anspruch 1 bis 5 auf mindestens ein Rohbauteil **durch** Sprühen oder Extrudieren,
b) Fügen der Rohbauteile, gegebenenfalls gefolgt vom (Punkt-)schweißen, Bördeln, Schrauben und/oder Nieten,
c) ggf. partielles Aushärten der Zusammensetzung **durch** kurzzeitiges Erwärmen der Teile auf Temperaturen bis zu 190°C,
d) ggf. Reinigen/Waschen der gefügten Rohbauteile ggf. gefolgt von üblichen Oberflächenvorbeharidlungen,
e) Elektrotauchlackierung,
f) Härten und/oder Vernetzen des Unterfütterurigsklebstoffes während des Einbrennens der Elektrotauchlackierung bei Temperaturen zwischen 160 °C und 240 °C.

## Claims

1. Hot-curing reactive composition based on natural and/or synthetic elastomers which contain olefinic double bonds and vulcanization agents, **characterised in that** it contains
a) at least one liquid cis-1,4-polyisoprene with a molecular weight between 20000 and 70000, preferably between 20000 and 50000,
b) a vulcanization system consisting of sulfur, accelerators and quinonoximes, and **in that** it is free from solid rubbers.

2. Composition according to claim 1, **characterised in that** it also contains at least one further liquid polyene from the group consisting of 1,2-polybutadiene, 1,4-polybutadiene, polyisoprene, polybutene, polyisobutylene, copolymers of butadiene and/or isoprene with styrene and/or acrylonitrile, copolymers of acrylic esters with dienes, wherein the molecular weight of the liquid polyene is in the range from 900 to about 40000.

3. Composition according to claim 2, **characterised in that** the liquid polyene(s) also contain terminal and/or randomly distributed carboxyl groups, carboxylic anhydride groups, hydroxyl groups, amino groups, mercapto groups or epoxy groups as functional groups.

4. Composition according to at least one of the preceding claims, **characterised in that** it also contains fillers, rheology auxiliary substances, extender oils, bonding agents and/or anti-aging agents.

5. Composition according to at least one of the preceding claims, **characterised in that** it has plastisol-like flow characteristics.

6. Preparation of the hot-curing reactive composition according to at least one of the preceding claims by mixing the components under high shear.

7. Use of the composition according to at least one of the preceding claims as a single- or two-component adhesive, sealant or coating composition in car shells.

8. Process for sealing coarse and/or fine joints in vehicle shells, **characterised in that** it comprises the following essential process steps
a) applying the composition according to claims 1 to 5 to at least one shell part by spraying or extruding,
b) joining the shell parts, optionally followed by (spot)-welding, lap-jointing, screwing and/or riveting,
c) optionally partly curing the composition by briefly heating the parts to temperatures of up to 190°C,
d) optionally cleaning/washing the joined shell parts, optionally followed by conventional surface pretreatments,
e) electrodeposition lacquering,
f) curing and/or cross-linking the sealing composition while firing on the electrodeposition lacquer at temperatures between 160°C and 240°C.

9. Process for undersealing structural parts in vehicle shells, **characterised in that** it comprises the following essential process steps
a) applying the composition according to claims 1 to 5 to at least one shell part by spraying or extruding,
b) joining the shell parts, optionally followed by (spot)-welding, lap-jointing, screwing and/or riveting,
c) optionally partly curing the composition by briefly heating the parts to temperatures of up to 190°C,
d) optionally cleaning/washing the joined shell parts, optionally followed by conventional surface pretreatments,
e) electrodeposition lacquering,
f) curing and/or cross-linking the underseal adhesive while firing on the electrodeposition lacquer at temperatures between 160°C and 240°C.

## Revendications

1. Composition réactive durcissant à chaud à base d'élastomères naturels et/ou synthétiques contenant des doubles liaisons oléfiniques, et d'agents de vulcanisation, **caractérisée en ce qu'**elle contient
a) au moins un cis-1,4-polyisoprène liquide ayant une masse moléculaire comprise entre 20 000 et 70 000, de préférence entre 20 000 et 50 000,
b) un système de vulcanisation à base de soufre, d'accélérateurs et d'oximes de quinone,
et qu'elle est exempte de caoutchoucs solides.

2. Composition selon la revendication 1, **caractérisée en ce qu'**elle contient en outre au moins un autre polyène liquide issu du groupe formé par le 1,2-polybutadiène, le 1,4-polybutadiène, le polyisoprène, le polybutène, le polyisobutylène, les copolymères du butadiène et/ou de l'isoprène avec le styrène et/ou l'acrylonitrile, les copolymères d'esters acryliques avec les diènes, la masse moléculaire du polyène liquide étant dans la plage de 900 à environ 40 000.

3. Composition selon la revendication 2, **caractérisée en ce que** le ou les polyène(s) liquide(s) contiennent en outre des groupes carboxyle, des groupes anhydride carboxylique, des groupes hydroxyle, des groupes amino, des groupes mercapto ou des groupes époxy, terminaux et/ou distribués de façon statistique, en tant que groupes fonctionnels.

4. Composition selon au moins l'une des revendications précédentes, **caractérisée en ce qu'**elle contient en outre des charges, des adjuvants rhéologiques, des huiles diluantes, des agents adhésifs et/ou des agents protecteurs contre le vieillissement.

5. Composition selon au moins l'une des revendications précédentes, **caractérisée en ce qu'**elle présente un comportement rhéologique du type plastisol.

6. Préparation de la composition réactive durcissant à chaud selon au moins l'une des revendications précédentes, par mélange des composants sous cisaillement élevé.

7. Utilisation de la composition selon au moins l'une des revendications précédentes, en tant que colle, matière d'étanchéité ou matière de revêtement à un ou deux composants, dans la construction automobile brute.

8. Procédé pour sceller les lignes de joint fines et/ou grossières dans la construction brute de véhicules, **caractérisée par** les étapes de procédé essentielles suivantes :
a) application de la composition selon la revendication 1 à 5 sur au moins un élément de construction brut par pulvérisation ou extrusion,
b) assemblage des éléments de construction bruts, éventuellement suivi par un soudage (par points), un bordage, un vissage, et/ou un rivetage,
c) éventuellement un durcissement partiel de la composition en chauffant pendant une courte durée les pièces à des températures allant jusqu'à 190°C,
d) éventuellement un nettoyage/lavage des éléments de construction bruts assemblés, éventuellement suivi par des prétraitements de surfaces courants,
e) une peinture électrophorétique par immersion,
f) durcissage et/ou réticulation de la masse de scellement pendant la cuisson de la peinture électrophorétique par immersion, à des températures comprises entre 160°C et 240°C.

9. Procédé pour la sous-doublure des éléments de construction dans la construction brute de véhicules, **caractérisé par** les étapes de procédé essentielles suivantes :
a) application de la composition selon la revendication 1 à 5 sur au moins un élément de construction brut, par pulvérisation ou extrusion,
b) assemblage des éléments de construction bruts, éventuellement suivi par un soudage (par points), un bordage, un vissage et/ou un rivetage,
c) éventuellement un durcissement partiel de la composition en chauffant pendant une courte durée les pièces à des températures allant jusqu'à 190°C,
d) éventuellement un nettoyage/lavage des éléments de construction bruts assemblés, éventuellement suivi par des prétraitements de surfaces courants,
e) peinture électrophorétique par immersion,
f) durcissage et/ou réticulation de la colle de sous-doublure pendant la cuisson de la peinture électrophorétique par immersion à des températures comprises entre 160°C et 240°C.
